# EUROPEAN PATENT APPLICATION

(11) **EP 2 508 297 A1**
(43) Date of publication of application: **10.10.2012**
(21) Application number: 10832964.0
(22) Date of filing: 24.09.2010
(51) Int. Cl.: B23Q 1/72, B23B 47/26

(54) **MACHINE TOOL BALANCER AND BALANCE CONTROL METHOD**

(30) Priority: 30.11.2009 JP 2009271255
(71) Applicant: Mitsubishi Heavy Industries, Ltd., Tokyo 108-8215 (JP)
(72) Inventor: SHIBUYA Taro, Tokyo 108-8215 (JP); TAUCHI Hiroyuki, Tokyo 108-8215 (JP)
(74) Representative: Henkel, Breuer & Partner
(86) International application number: PCT/JP2010/066478
(87) International publication number: WO 2011/065117

(57) **Abstract**

Disclosed are a machine tool balancer adaptable to ram-type horizontal boring machines, and a balance control method. To this end, the device has a suspension structure (16) comprising: a first linear guide which has a guide block (22a) and a guide rail (23) positioned inside of a saddle (14), and in which the guide block (22a) is fixed to the top surface of a ram (15) above the center of gravity thereof; and a second linear guide which has a guide block (26) and a guide rail (25) positioned outside of the saddle (14), and in which the guide rail (23) of the first linear guide is connected with the guide rail (25) of the second linear guide, and a first and second counterweight are connected with the guide block (26) of the second linear guide. Said guide block (26) is moved to a position directly above the guide block (22a) of the first linear guide in synchrony with the position of said guide block (22a), which moves together with the extending of the ram (15), and the second counterweight is moved in point symmetry to the position of the guide block (26) of the second linear guide.

## Description

### TECHNICAL FIELD

The present invention relates to a balancer of a machine tool such as a horizontal boring machine and to a balance control method.

### BACKGROUND ART

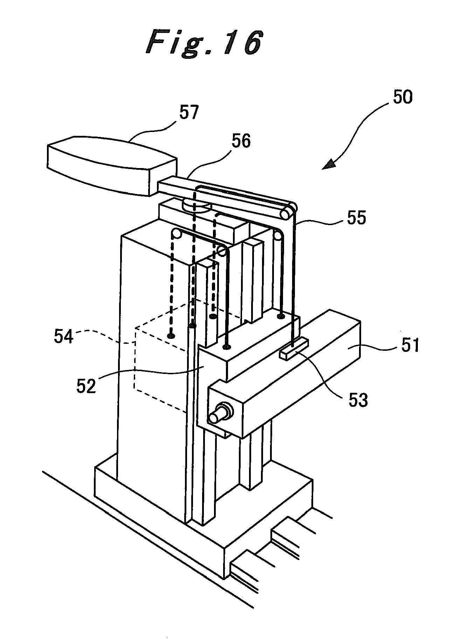

Fig. 16 shows a conventional balancer of a machine tool.
The machine tool shown in Fig. 16 is a ram-stock-type horizontal boring machine 50. In the horizontal boring machine 50, a ram stock 51 is supported at two spots as Bessel points thereof by an arm 53, and the arm 53 is suspended at the center of gravity thereof by a chain 55. The chain 55 is coupled to the center of gravity of a counterweight 54 through a swing arm 56. When the ram stock 51 is moved in its feeding direction, the swing arm 56, which is provided with a moment balance counterweight 57, is swung to move the counterweight 57 in the direction opposite to the feeding direction in synchronization with the movement so as to prevent a shift in the center of gravity of the whole machine. Moreover, in a case where an attachment is mounted to the front surface of the ram stock 51, a suspending position moving device (unillustrated) provided to the arm 53 corrects the suspending position on the basis of the center of gravity of the ram stock 51 with the attachment.
Patent Document 1: Japanese Patent Application Publication No. 2009-131924
Patent Document 2: Japanese Examined Patent Application Publication No. Hei 03-064264
Patent Document 3: Japanese Examined Patent Application Publication No. Sho 58-041965
Patent Document 4: Japanese Examined Patent Application Publication No. Sho 62-047125

### DISCLOSURE OF THE INVENTION

### PROBLEM TO BE SOLVED BY THE INVENTION

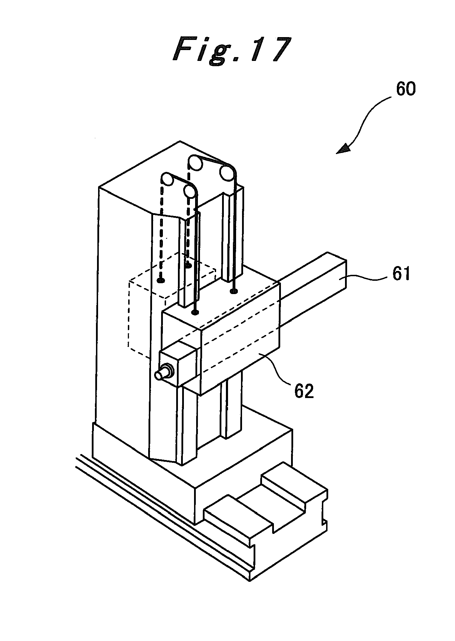

The above-described balancer is applicable to the ram-stock-type horizontal boring machine 50 in which a saddle 52 constrains part of the side surfaces of the ram stock 51, and the upper surface of the ram stock 51 is open as shown in Fig. 16. However, the above-described balancer is not applicable as is to a ram-type horizontal boring machine 60 in which a saddle 62 constrains the four side surfaces of the ram 61 as shown in Fig. 17.

The balancer shown in Fig. 16 has various advantages as follows: since the center of gravity around the column is even, the column does not fall down; since the ram is suspended at the center of gravity thereof, ran slide does not affect deformation of the ram; since the center of gravity of the ram can be corrected on an attachment basis, deformation of the ram is small, and thus the feeding accuracy is improved; since the supporting force on each sliding surface of the ram is even, the sliding portion does not wear unevenly, and thus a stable accuracy is maintained for a long period of time; and so on. On the other hand, the ram-type horizontal boring machine 60 shown in Fig. 17 has an advantage that the ram 61 can secure a high rigidity since the saddle 62 constrains the four side surfaces of the ram 61. Accordingly, the straightness of the spindle can be improved further greatly if the above-described balancer can be applied to the ram-type horizontal boring machine 60 shown in Fig. 17, and such application of the above-described balancer has been desired.

The present invention has been made in view of the above-described problem, and an object thereof is to provide a machine tool balancer applicable to a ram-type horizontal boring machine and a balance control method.

### MEANS FOR SOLVING THE PROBLEM

A machine tool balancer according to a first invention for solving the above problem comprises:
a saddle constraining four side surfaces of a ram in such a way that the ram is horizontally movable;
a first counterweight having a same weight as a weight of the ram and the saddle, coupled to the ram and the saddle, and suspending the ram and the saddle;
a second counterweight configured to be moved on the basis of an amount of feeding of the ram to prevent a shift in a position of the center of gravity of the machine tool;
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block;
a suspending position moving device configured to move the second guide block to a position directly above the first guide block in synchronization with a position of the first guide block which is moved along with the feeding of the ram (in other words, the first guide block = the center of gravity of the ram, and the second guide block is moved to the position directly above the center of gravity in synchronization with the center of gravity moved along with the feeding of the ram); and
a counterweight moving device configured to move the second counterweight to a position point-symmetrical to the position of the second guide block.

A machine tool balancer according to a second invention for solving the above problem is that wherein
in the machine tool balancer according to the first invention,
a third guide block movably supported on the first guide rail is provided on an upper surface of the ram corresponding to and above a center of gravity of the ram in a state where an attachment with a maximum weight is mounted to the ram, and
in a case where an attachment is mounted to the ram, the suspending position moving device moves the second guide block, on the basis of a center of gravity of the ram which corresponds to a weight of the mounted attachment and exists between the first guide block and the third guide block, to a position directly above the center of gravity in synchronization with the center of gravity which is moved along with the feeding of the ram.

A machine tool balancer according to a third invention for solving the above problem is that wherein
in the machine tool balancer according to the second invention,
in the case where the attachment with the maximum weight is mounted to the ram, the suspending position moving device moves the second guide block to a position directly above the third guide block in synchronization with a position of the third guide block which is moved along with the feeding of the ram (in other words, the third guide block = the center of gravity of the ram with the attachment, and the second guide block is moved to the position directly above the center of gravity in synchronization with the center of gravity moved along with the feeding of the ram).

A machine tool balancer according to a fourth invention for solving the above problem comprises:
a saddle constraining four side surfaces of a ram in such a way that the ram is horizontally movable;
a first counterweight having a same weight as a weight of the ram and the saddle, coupled to the ram and the saddle, and suspending the ram and the saddle;
a second counterweight configured to be moved on the basis of an amount of feeding of the ram to prevent a shift in a center of gravity of the machine tool;
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block;
a coupling structure including a bracket coupling the ram and the second guide block without interfering with the saddle and the suspension structure, and configured to move the second guide block by means of the bracket to a position directly above the first guide block in synchronization with a position of the first guide block which is moved along with the feeding of the ram; and
a counterweight moving device configured to move the second counterweight to a position point-symmetrical to the position of the second guide block.

A machine tool balancer according to a fifth invention for solving the above problem is that wherein
in the machine tool balancer according to the fourth invention,
a third guide block movably supported on the first guide rail is provided on an upper surface of the ram corresponding to and above a center of gravity of the ram in a state where an attachment with a maximum weight is mounted to the ram,
a hydraulic cylinder is provided between the second guide block and the bracket, and
in a case where an attachment is mounted to the ram, the hydraulic cylinder moves the second guide block, on the basis of a center of gravity of the ram which corresponds to a weight of the mounted attachment and exists between the first guide block and the third guide block, to a position directly above the center of gravity.

A machine tool balancer according to a sixth invention for solving the above problem is that wherein
in the machine tool balancer according to the fifth invention,
in the case where the attachment with the maximum weight is mounted to the ram, the hydraulic cylinder moves the second guide block to a position directly above the third guide block.

A method of controlling balance of a machine tool according to a seventh invention for solving the above problem includes
a saddle constraining four side surfaces of a ram in such a way that the ram is horizontally movable,
a first counterweight having a same weight as a weight of the ram and the saddle, coupled to the ram and the saddle, and suspending the ram and the saddle,
a second counterweight configured to be moved on the basis of an amount of feeding of the ram to prevent a shift in a center of gravity of the machine tool, and
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block. The method comprises:
moving the second guide block to a position directly above the first guide block in synchronization with a position of the first guide block which is moved along with the feeding of the ram; and
moving the second counterweight to a position point-symmetrical to the position of the second guide block.

A method of controlling balance of a machine tool according to an eighth invention for solving the above problem is that wherein
in the method of controlling balance of a machine tool according to the seventh invention,
a third guide block movably supported on the first guide rail is further provided on an upper surface of the ram corresponding to and above a center of gravity of the ram in a state where an attachment with a maximum weight is mounted to the ram, and
in a case where an attachment is mounted to the ram, the second guide block is moved, on the basis of a center of gravity of the ram which corresponds to a weight of the mounted attachment and exists between the first guide block and the third guide block, to a position directly above the center of gravity in synchronization with the center of gravity which is moved along with the feeding of the ram.

A method of controlling balance of a machine tool according to a ninth invention for solving the above problem is that wherein
in the method of controlling balance of a machine tool according to the eighth invention,
in the case where the attachment with the maximum weight is mounted to the ram, the second guide block is moved to a position directly above the third guide block in synchronization with a position of the third guide block which is moved along with the feeding of the ram.

A method of controlling balance of a machine tool according to a tenth invention for solving the above problem includes
a saddle constraining four side surfaces of a ram in such a way that the ram is horizontally movable,
a first counterweight having a same weight as a weight of the ram and the saddle, coupled to the ram and the saddle, and suspending the ram and the saddle,
a second counterweight configured to be moved on the basis of an amount of feeding of the ram to prevent a shift in a center of gravity of the machine tool,
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block, and
a coupling structure including a bracket coupling the ram and the second guide block without interfering with the saddle and the suspension structure, the coupling structure being configured to move the second guide block by means of the bracket to a position directly above the first guide block in synchronization with a position of the first guide block which is moved along with the feeding of the ram. The method comprises
moving the second counterweight to a position point-symmetrical to the position of the second guide block.

A method of controlling balance of a machine tool according to an eleventh invention for solving the above problem is that wherein
in the method of controlling balance of a machine tool according to the tenth invention,
a third guide block movably supported on the first guide rail is further provided on an upper surface of the ram corresponding to and above a center of gravity of the ram in a state where an attachment with a maximum weight is mounted to the ram,
a hydraulic cylinder is provided between the second guide block and the bracket, and
in a case where an attachment is mounted to the ram, the hydraulic cylinder moves the second guide block on the basis of a center of gravity of the ram, which corresponds to a weight of the mounted attachment and exists between the first guide block and the third guide block, to a position directly above the center of gravity.

A method of controlling balance of a machine tool according to a twelfth invention for solving the above problem is that wherein
in the method of controlling balance of a machine tool according to the eleventh invention,
in the case where the attachment with the maximum weight is mounted to the ram, the hydraulic cylinder moves the second guide block to a position directly above the third guide block.

### EFFECT OF THE INVENTION

According to the present invention, a balancer can be provided to a ram-type horizontal boring machine since a suspension structure configured to suspend a ram constrained at the four surfaces thereof by a saddle is provided. Thus, by the balancer provided to the ram-type horizontal boring machine, a shift in the center of gravity of the whole machine can be prevented. As a result, a change in weight balance due to a horizontal movement of the ram and a change in weight balance caused when any of attachments of various types is attached to the front end of the ram are handled. This suppresses displacement and deformation originating from the changes in weight balance. Accordingly, the straightness of highly rigid rams can be improved.

### BRIEF DESCRIPTION OF THE DRAWINGS

[Fig. 1] Fig. 1 is a perspective view of a machine tool including a balancer according to the present invention.
[Fig. 2] Fig. 2 is a cross-sectional view of a suspension structure, a ram, and a saddle according to the present invention in a state where the ram is not yet fed.
[Fig. 3] Fig. 3 is a cross-sectional view of the suspension structure, the ram, and the saddle according to the present invention in a state where the ram is fed.
[Fig. 4] Fig. 4 is a perspective view showing the suspension structure according to the present invention.
[Fig. 5] Fig. 5 is a view of the suspension structure, the ram, and the saddle according to the present invention as seen from a front side of the machine tool.
[Fig. 6] Fig. 6 is a view of the suspension structure, the ram, and the saddle according to the present invention as seen from a lateral side of the machine tool.
[Fig. 7] Fig. 7 is a view of the balancer, the ram, and the saddle according to the present invention as seen from a top side of the machine tool.
[Fig. 8] Fig. 8 is a flowchart describing ram/suspending-position movement control according to the present invention.
[Fig. 9] Fig. 9 is a flowchart describing ram/counterweight control according to the present invention.
[Fig. 10] Fig. 10 is a perspective view of a machine tool including a balancer according a different embodiment of the present invention.
[Fig. 11] Fig. 11 is a cross-sectional view of a suspension structure, a ram, and a saddle according to the different embodiment of the present invention in a state where the ram is not yet fed.
[Fig. 12] Fig. 12 is a cross-sectional view of the suspension structure, the ram, and the saddle according to the different embodiment of the present invention in a state where the ram is fed.
[Fig. 13] Fig. 13 is a view of the suspension structure, the ram, and the saddle according to the different embodiment of the present invention as seen from a lateral side of the machine tool.
[Fig. 14] Fig. 14 is a view of the balancer, the ram, and the saddle according to the different embodiment of the present invention as seen from a top side of the machine tool.
[Fig. 15] Fig. 15 is a flowchart describing ram/suspending-position movement control and ram/counterweight control according to the different embodiment of the present invention.
[Fig. 16] Fig. 16 is a perspective view showing a balancer of a ram-stock-type horizontal boring machine.
[Fig. 17] Fig. 17 is a perspective view showing a ram-type horizontal boring machine.

### EXPLANATION OF THE REFERENCE NUMERALS

- 10, 10': horizontal boring machine
- 14: saddle
- 15: ram
- 16: suspension structure
- 17: swing arm
- 18: counterweight (for balancing moment)
- 20: suspending position moving device
- 21: ram balance beam
- 22a, 22b: uide block
- 23: guide rail
- 24: beam
- 25: guide rail
- 26: guide block
- 30: counterweight moving device
- 33: counterweight (for balancing ram' and saddle's weights)
- 40: coupling structure
- 42: hydraulic cylinder

### BEST MODES FOR CARRYING OUT THE INVENTION

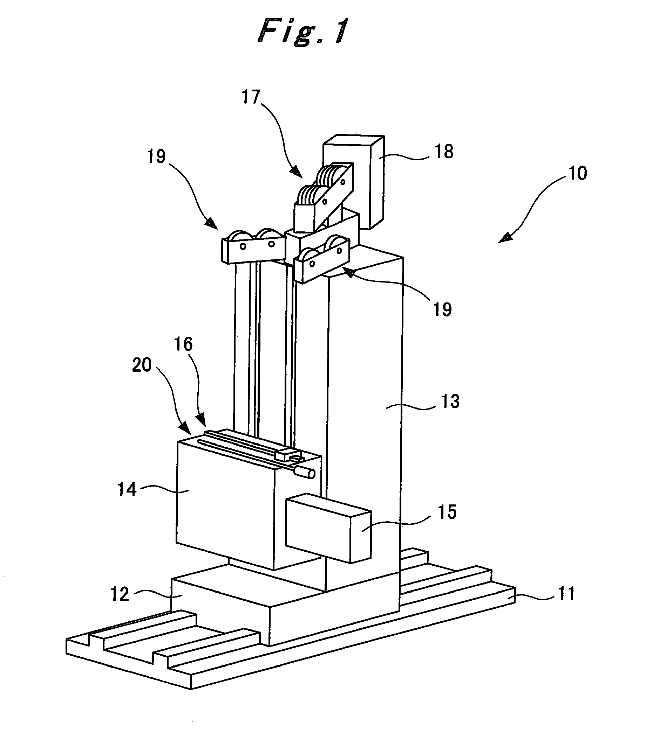

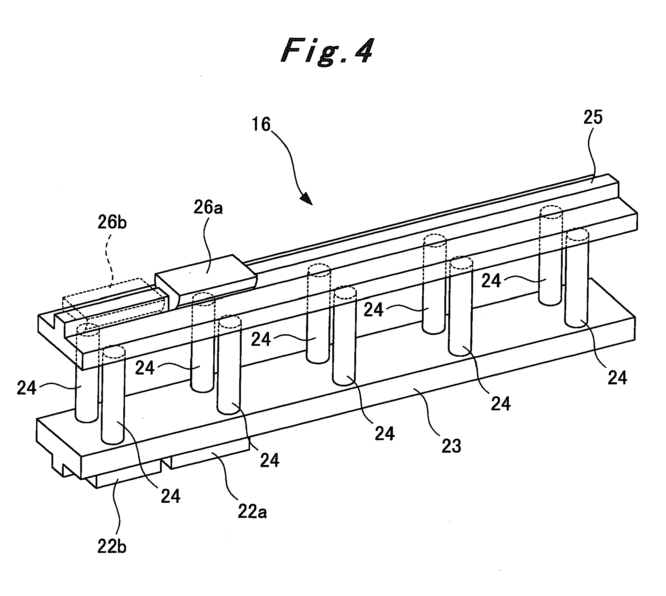

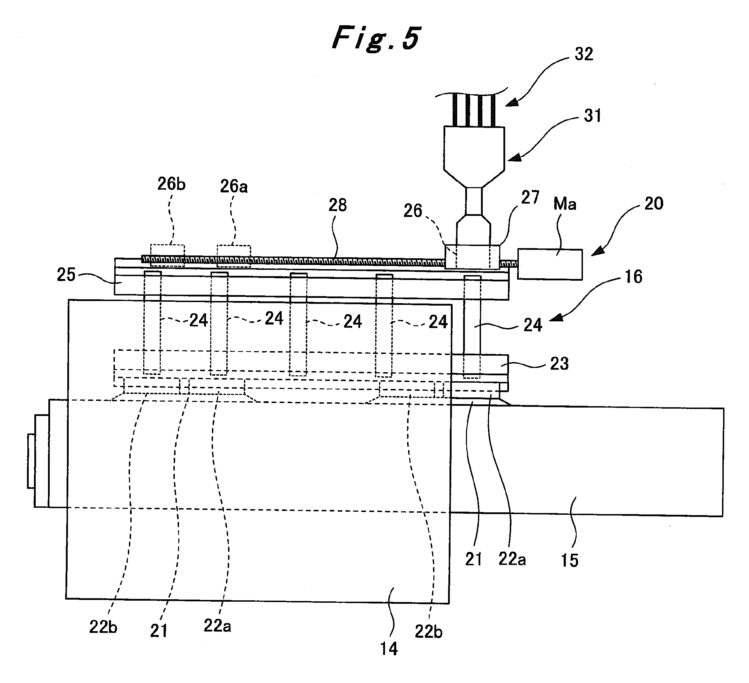

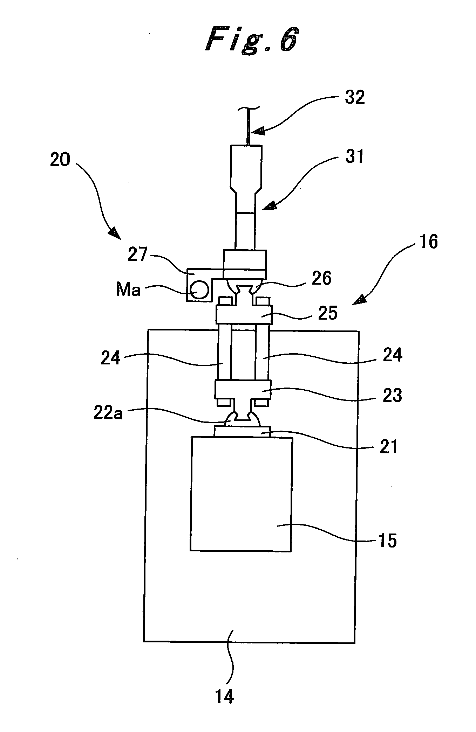

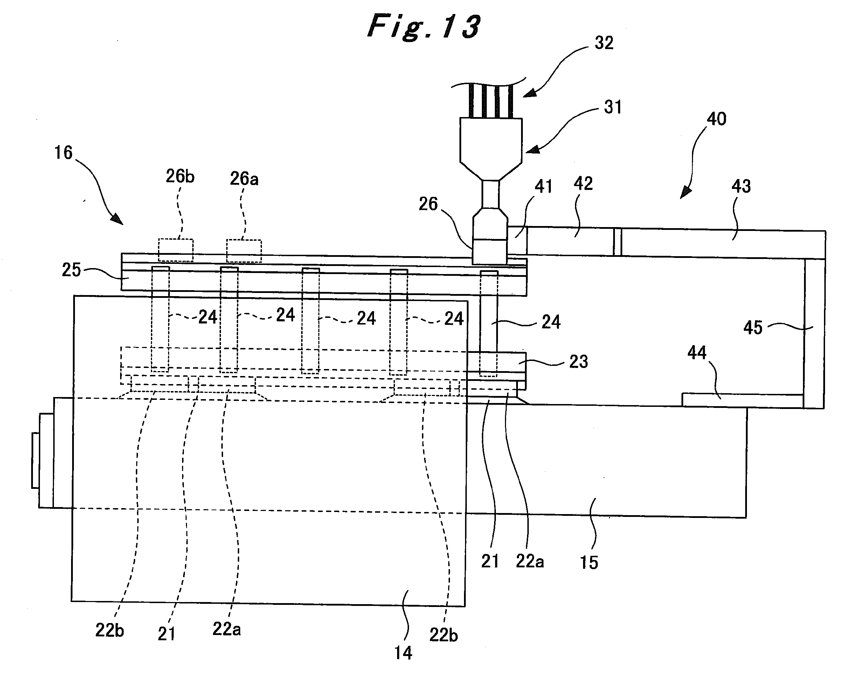

Hereinbelow, a machine tool balancer and a balance control method according to the present invention will be described with reference to Figs. 1 to 15.

### (Embodiment 1)

In a ram-type horizontal boring machine 10 shown in Fig. 1, a column base 12 is provided on a bed 11 movably in a horizontal direction (referred to as a front-rear direction for convenience), and a column 13 stands on the column base 12. A saddle 14 is supported on one of the side surfaces of the column 13 movably in the vertical direction (referred to as a top-bottom direction for convenience), and a ram 15 is supported on the saddle 14 movably in a horizontal direction (referred to as a left-right direction for convenience). The ram 15 includes a spindle, and a machining target workpiece is machined using a tool attached to the front end of the spindle. In machining, the column base 12, the saddle 14, and the ram 15 are moved in the front-rear direction, the top-bottom direction, and the left-right direction, respectively, to perform a desired machining.

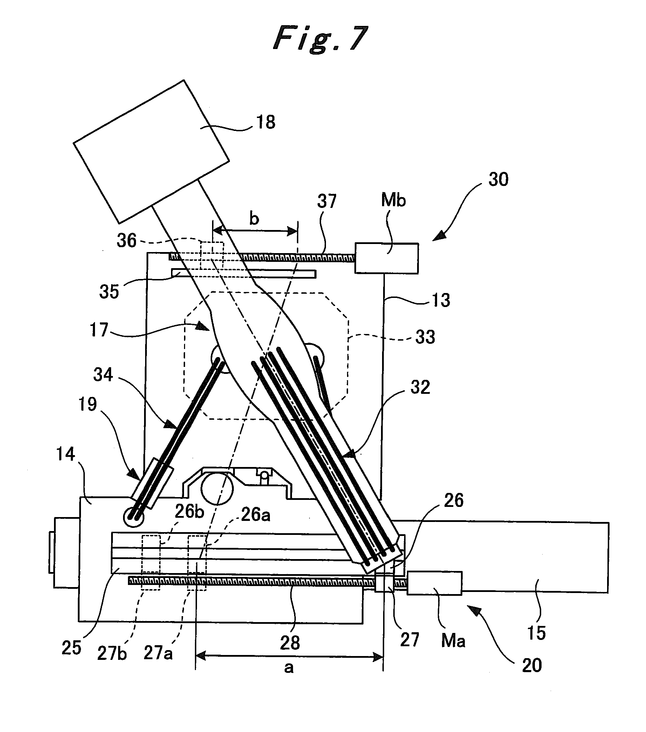

To explain with reference to Fig. 1 and also Fig. 7 since Fig. 1 omits the illustration of a counterweight 33 (first counterweight) and chains 34, the saddle 14 is coupled to a counterweight 33 through two pulleys 19 and two chains 34. Moreover, to explain with reference to Fig. 1 and also Fig. 7 since Fig. 1 omits the illustration of chains 32, the ram 15 is coupled to the center of gravity of the counterweight 33 through a suspension structure 16, chains 32, and a swing arm 17. A shift in the center of gravity of the whole machine is prevented by a moment balance counterweight 18 (second counterweight) provided to the swing arm 17. The counterweight 33 has the same weight as that of the saddle 14 and the ram 15 and is provided inside the column 13. The counterweight 33 is used to suspend the saddle 14 and the ram 15.

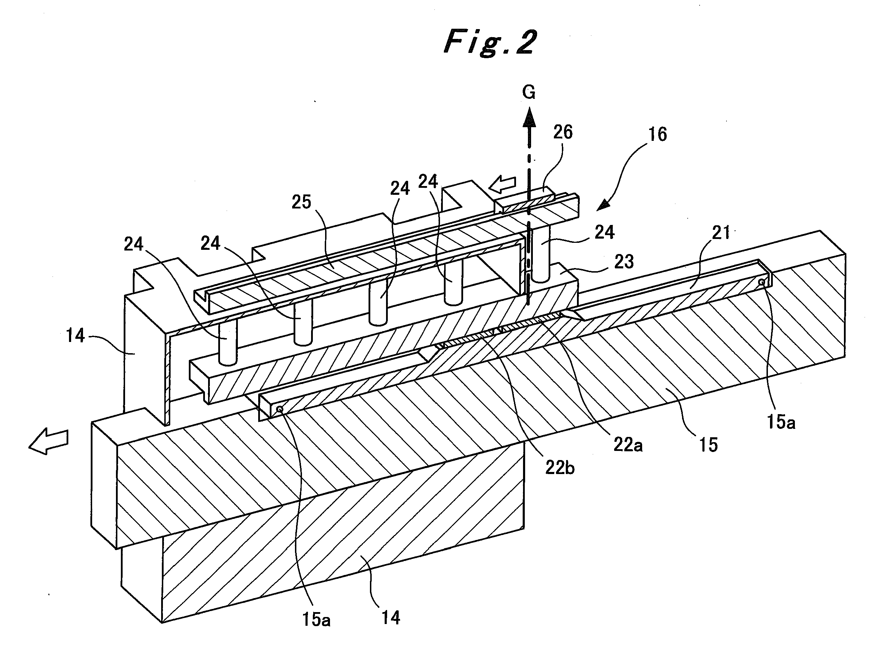

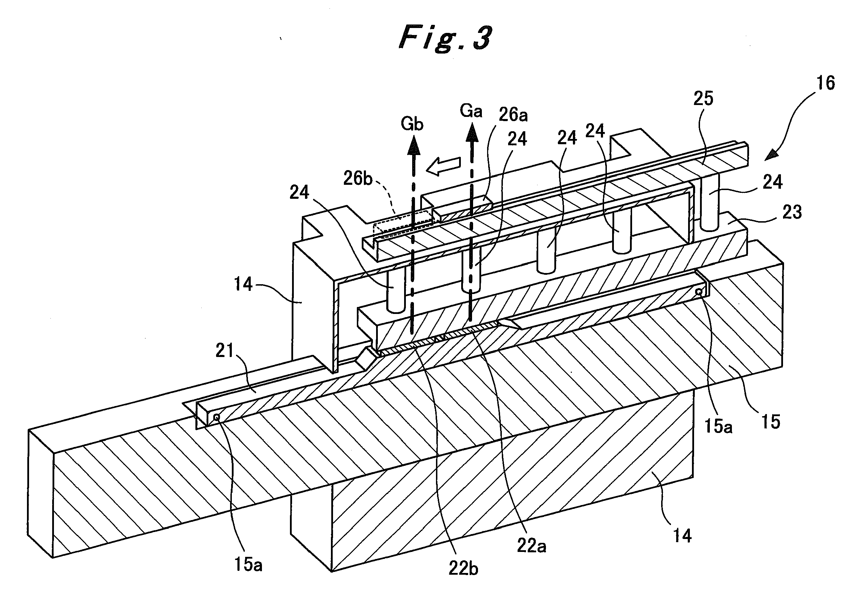

Now, the suspension structure 16 will be described with reference to Figs. 2 to 6. Note that although various structural components are provided inside the saddle 14 and the ram 15, Figs. 2 and 3 omit the illustration thereof for the sake of simplicity in the drawings and explanation.

In this embodiment, the saddle 14 constrains the ram 15 at the four side surfaces thereof (four-surface constraint) to provide a structure further increasing the rigidity of the ram 15. In addition, a ram balance beam 21 is provided in the upper surface of the ram 15, and the ram balance beam 21 is supported at two Bessel points 15a on the ram 15. The thickness of the ram balance beam 21 is increased so that the ram balance beam 21 can handle shifts in the center of gravity of the ram 15 (more specifically, handle a shift in the center of gravity depending upon whether an attachment is mounted or not and handle a shift in the center of gravity by each attachment). A guide block 22a (first guide block) and a guide block 22b (third guide block) are fixed to the upper surface of the thicker portion of the ram balance beam 21 having a trapezoidal cross section.

The guide blocks 22a and 22b are supported movably on a guide rail 23 (first guide rail). The guide blocks 22a and 22b are configured to be moved on the guide rail 23 along with the feeding of the ram 15 (see Fig. 3). Meanwhile, the guide rail 23 is connected through multiple beams 24 to the other guide rail 25 (second guide rail) disposed on the upper surface of the saddle 14. A guide block 26 (second guide block) supported movably on the guide rail 25 is coupled to the chains 32 through a support arm 31, and coupled to the counterweight 33 through the chains 32. Note that the saddle 14 is provided with through-holes only at the positions of the beams 24 connecting the guide rail 23 and the guide rail 25, and the suspension structure 16 is disposed in a state of floating inside the saddle 14.

As described, the suspension structure 16 is formed of the guide blocks 22a and 22b, the guide rail 23, the beams 24, the guide rail 25, and the guide block 26 and has a structure in which a first linear guide (the guide blocks 22a and 22b and the guide rail 23) inside the saddle 14 and a second linear guide (the guide block 26 and the guide rail 25) outside the saddle 14 are connected by the multiple beams 24.

In this embodiment, the saddle 14 constrains the four side surfaces of the ram 15, and no opening portion can therefore be provided to an upper portion of the ram 15. However, by providing the suspension structure 16, the chains 32 suspending the guide block 26 as a suspending point and the ram balance beam 21 directly supporting the ram 15 are connected to each other, and the ram 15 inside the saddle 14 can therefore be suspended by the chains 32. Moreover, by providing the suspension structure 16, a suspending position moving device 20 to be described later can be installed outside the saddle 14.

The guide block 22a mentioned above is for a case where no attachment is present at the front end of the ram 15. In the case where no attachment is present at the front end of the ram 15, the position of the guide block 26 is disposed directly above the guide block 22a so that the ram 15 may be supported by using the guide block 22a. While the ram 15 is not fed, the guide block 26 is disposed directly above the guide block 22a, and the ram 15 is suspended at a suspending position G in Fig. 2 by the chains 32 through the suspension structure 16. Moreover, while the ram 15 is fed, the guide block 26 is likewise disposed directly above the guide block 22a in synchronization with the moved position of the guide block 22a, and the ram 15 is suspended at a suspending position Ga in Fig. 3 by the chains 32 through the suspension structure 16. In other words, the guide block 22a = the center of gravity of the ram 15 itself, and the guide block 26 is moved to the position directly above the center of gravity in synchronization with the center of gravity moved along with the feeding of the ram 15.

In contrast, the guide block 22b mentioned above is for a case where an attachment with the maximum weight is present at the front end of the ram 15. In the case where the attachment with the maximum weight is present at the front end of the ram 15, the position of the guide block 26 is disposed directly above the guide block 22b so that the ram 15 may be supported by using the guide block 22b. While the ram 15 is not fed, then in Fig. 2, the guide block 26 is disposed directly above the guide block 22b though the illustration thereof is omitted, and the ram 15 is suspended by the chains 32 through the suspension structure 16. Moreover, while the ram 15 is fed, the guide block 26 is likewise disposed directly above the guide block 22b in synchronization with the moved position of the guide block 22b, and the ram 15 is suspended at a suspending position Gb in Fig. 3 by the chains 32 through the suspension structure 16. In other words, the guide block 22b = the center of gravity of the ram 15 with the attachment, and the guide block 26 is moved to the position directly above the center of gravity in synchronization with the center of gravity moved along with the feeding of the ram 15.

Moreover, in a case of mounting an attachment of some other type with a weight which is not the maximum weight, the position of the guide block 26 is disposed directly above a center of gravity which corresponds to the weight of the mounted attachment and exists between the guide block 22a and the guide block 22b. In this case too, regardless of whether the ram 15 is fed or the ram 15 is not fed, the guide block 26 is disposed directly above the center of gravity in synchronization with the amount of the feeding of the ram 15, and the ram 15 is suspended by the chains 32 through the suspension structure 16. In other words, in this case, the ram 15 is suspended in a state where the weight is distributed to the guide block 22a and the guide block 22b.

In addition, the suspending position moving device 20 configured to move the guide block 26 in synchronization with the feeding of the ram 15 is provided along the guide rail 25. The suspending position moving device 20 includes a servomotor Ma, a ball screw 28 rotationally driven by the servomotor Ma, and a movable member 27 provided to be movable on the ball screw 28 along with the rotation of the ball screw 28. The movable member 27 and the guide block 26 are connected to each other, and the servomotor Ma is driven and controlled such that the guide block 26 can be moved together with the movable member. By such control, the guide block 26 is moved and the suspending position is thus moved in synchronization with the feeding of the ram 15.

The suspending position moving device 20 is configured to also perform control on the moving of the position of the guide block 26 due to the mounting of an attachment, i.e. control for handling a shift in the center of gravity of the ram 15 due to the mounting of an attachment. As mentioned above, in the case where no attachment is present, the position of the guide block 26 is set directly above the guide block 22a; in the case where an attachment with the maximum weight is present, the position of the guide block 26 is set directly above the guide block 22b; and in the case where an attachment of some other type with a weight which is not the maximum weight is mounted, the position of the guide block 26 is set directly above the center of gravity in a state where the attachment of some other type is mounted. Accordingly, it is possible to handle various multiple types of attachments and control the suspending position to a given position based on the type and the like.

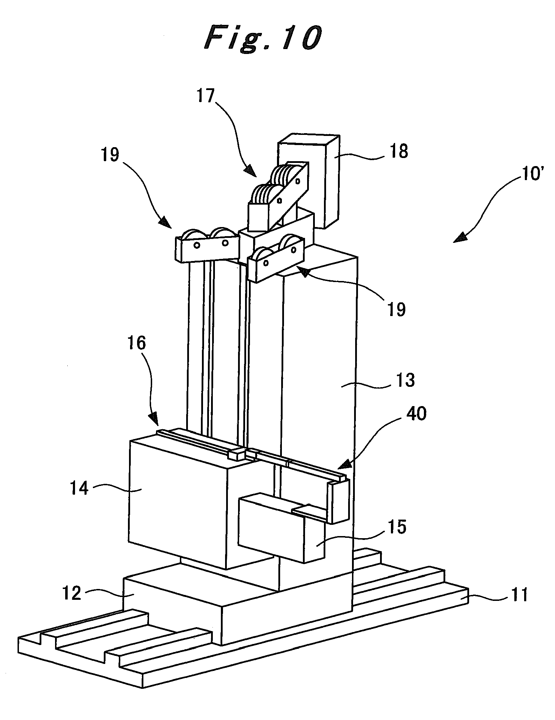

Note that instead of the suspending position moving device 20, a coupling structure 40 including a hydraulic cylinder 42 may be used to move the center of gravity of the ram 15 and change the suspending position for each attachment, as will be explained in later-described Embodiment 2 (see Figs. 10 to 15, etc).

Additionally, a counterweight moving device 30 configured to swing the swing arm 17 and thus move the counterweight 18 in synchronization with the feeding of the ram 15 is also provided on the column 13. The counterweight moving device 30 includes a servomotor Mb, a ball screw 37 rotationally driven by the servomotor Mb, a guide block 36 provided to be capable of moving on the ball screw 37 along with the rotation of the ball screw 37, and a guide rail 35 on which the guide block 36 is supported movably. The guide block 36 and the swing arm 17 are coupled to each other, and the servomotor Mb is driven and controlled such that the swing arm 17 can be swung together with the guide block 36. By such control, the swing arm 17 is swung to move the counterweight 18 in the direction opposite to the feeding direction of the ram 15 in synchronization with the feeding of the ram 15, so as to prevent a shift in the center of gravity of the whole machine.

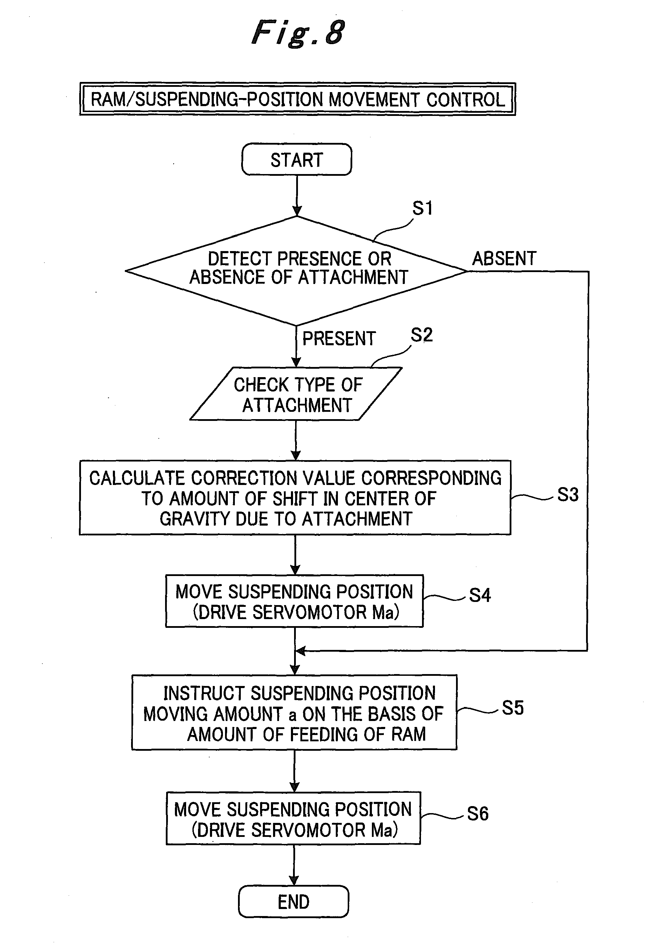

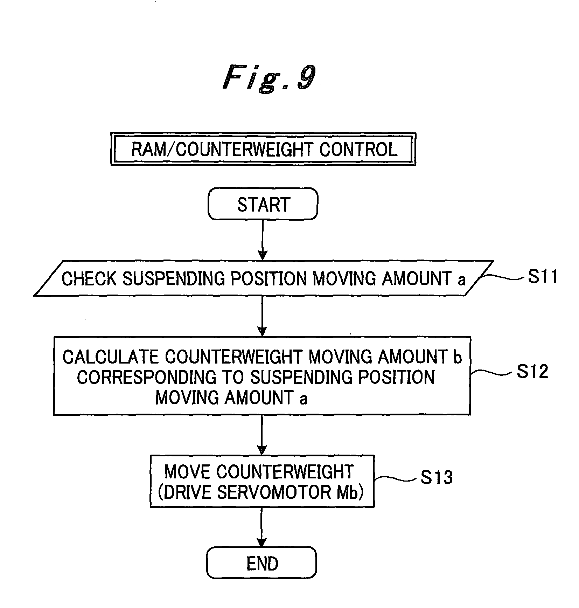

Now, ram/suspending-position movement control shown in Fig. 8 and ram/counterweight control shown in Fig. 9 will be described with reference to Fig. 7.

In the ram/suspending-position movement control shown in Fig. 8, firstly, the presence or absence of an attachment at the front end of the ram 15 is detected (step S1). Then, the process proceeds to step S2 if an attachment is present, while the process proceeds to step S5 if no attachment is present.

If an attachment is present, the type of the attachment is checked (step S2). Then, a correction value corresponding to the amount of the shift in the center of gravity due to the attachment is calculated (step S3). Thereafter, the servomotor Ma is driven based on the correction value to move the suspending position to the position corresponding to the new center of gravity (step S4).

Then, based on an instruction regarding the amount of the feeding of the ram 15, a suspending position moving amount a (step S5; see also reference numeral a in Fig. 7) is instructed, and the servomotor Ma is driven to move the suspending position in synchronization with the position to which the ram 15 is fed (step S6).

On the other hand, in the ram/counterweight control shown in Fig. 9, the suspending position moving amount a instructed in step S5 described above is checked (step S11). Then, a moving amount b in the counterweight moving device 30 corresponding to the suspending position moving amount a is calculated (step S12; see also reference numeral b in Fig. 7).

Then, based on the calculated moving amount b, the servomotor Mb is driven to swing the swing arm 17 in synchronization with the position to which the ram 15 is fed, so that the guide block 36, i.e. the counterweight 18 is moved to a position which is point-symmetrical to the position of the guide block 26. Moving the counterweight 18 in this manner prevents a shift in the center of gravity of the horizontal boring machine 10.

By the above configuration, the horizontal boring machine 10 with the ram 15 constraining the four surfaces of the saddle 14 can secure a high rigidity for the ram 15 and achieve a perfect balancer allowing no shift in the center of gravity of the whole machine. As a result, a change in weight balance due to a horizontal movement of the ram 15 and a change in weight balance caused when an attachment is attached to the front end of the ram 15 are handled. This suppresses displacement and deformation originating from the changes in weight balance and prevents a shift in the center of gravity of the whole machine. Accordingly, the straightness of the highly rigid ram 15 can be improved.

### (Embodiment 2)

A ram-type horizontal boring machine 10' shown in Fig. 10 differs from the horizontal boring machine 10 shown in Fig. 1 in a structure around the suspension structure 16. In the horizontal boring machine 10', however, the other structures including the structure of the suspension structure 16 are the same; therefore, the same reference numerals are given thereto, and overlapping descriptions are omitted.

Specifically, as shown in Fig. 10, the horizontal boring machine 10' is one in which the suspending position moving device 20 is removed from the horizontal boring machine 10 shown in Fig. 1, and the aforementioned coupling structure 40 coupling the guide block 26 and the ram 15 to each other is provided instead.

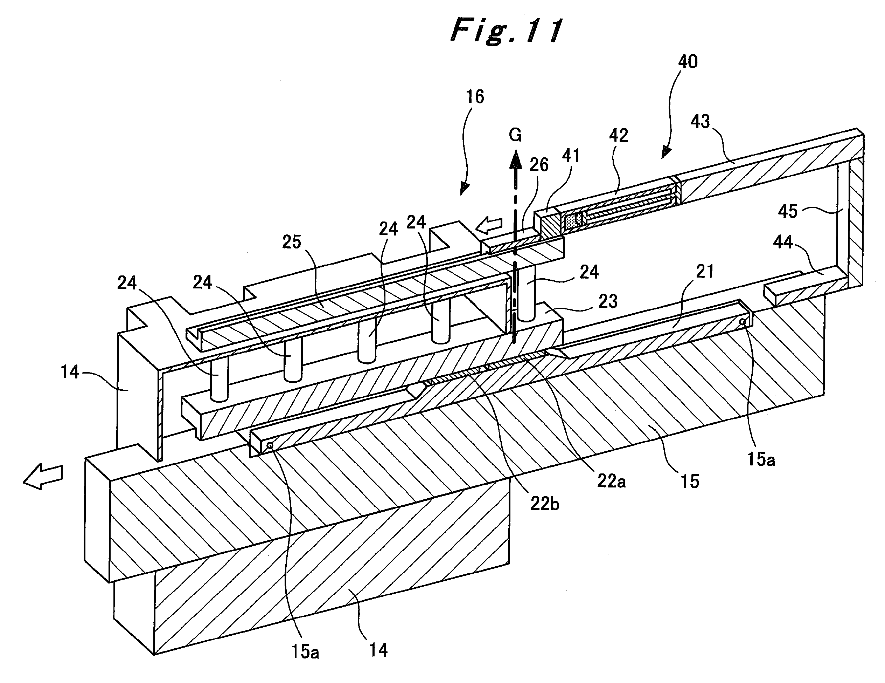

The structure and operation of the coupling structure 40 will be described with reference also to Figs. 11 to 14. The coupling structure 40 is configured to couple the guide block 26 and the ram 15 to each other as mentioned above, and includes: a connecting member 41 fixed to the guide block 26 and being capable of moving on the guide rail 25 together with the guide block 26; a hydraulic cylinder 42 attached to the connecting member 41 and configured to extend and retract in the same direction as the moving direction of the guide block 26; a bracket 43 attached to the hydraulic cylinder 42 and extending in the same direction as the moving direction of the guide block 26; a bracket 44 attached to the upper surface of the ram 15 and extending in the same direction as the moving direction of the ram 15; and a coupling bracket 45 coupling the bracket 43 and the bracket 44 to each other.

In other words, the coupling structure 40 is a structure substantially coupling the guide block 26 and the guide blocks 22a and 22b to each other and configured to move the guide block 26 in synchronization with the feeding of the ram 15. In Embodiment 1, the suspending position moving device 20 is used to move the guide block 26 in synchronization with the feeding of the ram 15. In this embodiment, the coupling structure 40 is provided, allowing the guide block 26 to move in synchronization with the feeding of the ram 15 with a simpler configuration.

Note that the bracket 44 is configured to be moved to a position underneath the guide rail 23 when the ram 15 is fed, and therefore has such a thickness that the bracket 44 will not interfere with the guide rail 23. Moreover, the connecting member 41, the hydraulic cylinder 42, and the bracket 43 are configured to be moved on the guide rail 25 together with the guide block 26, and their lower surfaces are therefore at such a position that the lower surfaces will not interfere with the guide rail 25. In addition, the coupling bracket 45 is disposed rearward of the rear end of the ram 15 so that the coupling bracket 45 will not interfere with the suspension structure 16 and the saddle 14 even when the ram 15 is fed to the maximum extent, and the lengths of the bracket 43 and the bracket 44 are so set as to obtain such an arrangement. In this embodiment, the bracket 43, the coupling bracket 45, and the bracket 44 are arranged in a substantially U shape and are coupled to the guide block 26 through the hydraulic cylinder 42.

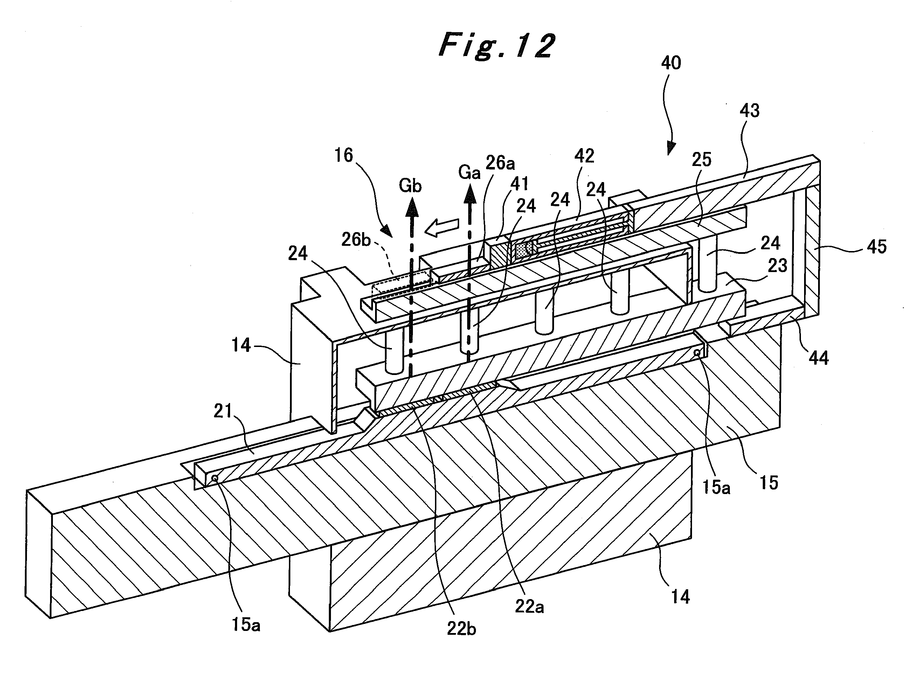

In a case where no attachment is mounted to the front end of the ram 15, the hydraulic cylinder 42 is in a fully retracted state, and the guide block 26 is moved in synchronization with the feeding of the ram 15 while maintaining this state (see G in Fig. 11 and Ga in Fig. 12, for example). In this case, the guide block 26 is disposed at a position directly above the guide block 22a (= the center of gravity of the ram 15) that corresponds to the center of gravity of the ram 15 itself.

In contrast, in a case where an attachment is mounted to the front end of the ram 15, the amount of the extension of the hydraulic cylinder 42 is controlled based on the mounted attachment, and the guide block 26 is moved in synchronization with the feeding of the ram 15 while maintaining this state. In this case, the center of gravity of the whole ram 15 with the attachment exists between the guide block 22a and the guide block 22b, and the guide block 26 is disposed directly above this center of gravity. Also, in a case where an attachment with the maximum weight is mounted, the amount of the extension of the hydraulic cylinder 42 is so controlled that the guide block 26 is disposed directly above the guide block 22b (= the center of gravity of the ram 15 with the attachment with the maximum weight), and the guide block 26 is moved in synchronization with the feeding of the ram 15 while maintaining this state (see Gb in Fig. 12, for example).

Multiple proximity sensors (unillustrated) are provided on the outer circumference of the hydraulic cylinder 42 on the basis of the positions of the center of gravity corresponding to each of attachments. In controlling the amount of the extension of the hydraulic cylinder 42, the proximity sensors are used to control the amount of the extension of the hydraulic cylinder 42 on the basis of the attachment and change the suspending position on an attachment basis to handle a shift in the center of gravity of the ram 15. Accordingly, it is possible to handle various multiple types of attachments and change the suspending position to a given position based on the type and the like.

As in the case of Embodiment 1, in the counterweight moving device 30, the servomotor Mb is driven and controlled such that the swing arm 17 can be swung to move the counterweight 18 in the direction opposite to the direction of the feeding of the ram 15 in synchronization with the feeding of the ram 15, so as to prevent a shift in the center of gravity of the whole machine.

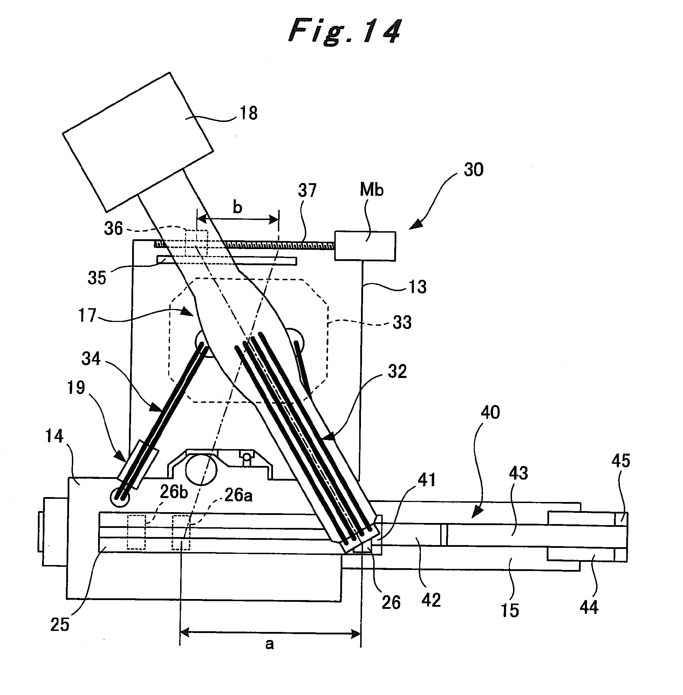

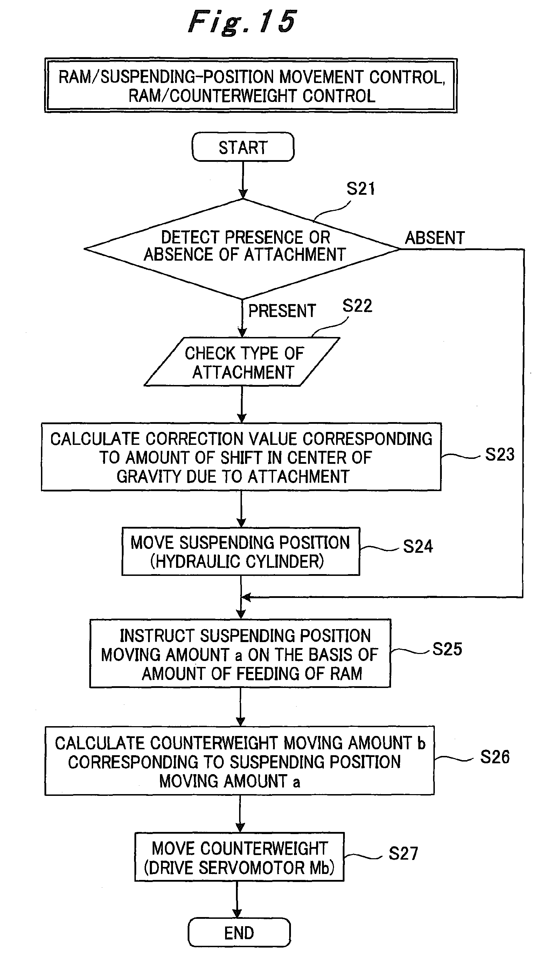

Now, ram/suspending-position movement control and counterweight control shown in Fig. 15 will be described with reference to Fig. 14.

First, the presence or absence of an attachment at the front end of the ram 15 is detected (step S21). Then, the process proceeds to step S22 if an attachment is present, while the process proceeds to step S25 if no attachment is present.

If an attachment is present, the type of the attachment is checked (step S22). Then, a correction value corresponding to the amount of the shift in the center of gravity due to the attachment is calculated (step S23). Thereafter, the hydraulic cylinder 42 is driven by using the proximity sensor corresponding to the correction value to move the suspending position to the position corresponding to the new center of gravity (step S24).

Then, based on an instruction regarding the amount of the feeding of the ram 15, a suspending position moving amount a (step S25; see also reference numeral a in Fig. 14) is instructed, and the ram 15 is fed accordingly. In this event, since the ram 15 and the guide block 26 are coupled by the coupling structure 40, the position of the guide block 26, i.e. the suspending position is spontaneously moved in synchronization with the amount of the feeding of the ram 15.

On the other hand, in the counterweight moving device 30, the suspending position moving amount a instructed in step S25 described above is checked. Then, a moving amount b in the counterweight moving device 30 corresponding to the suspending position moving amount a is calculated (step S26; see also reference numeral b in Fig. 14).

Then, based on the calculated moving amount b, the servomotor Mb is driven (step S27) to swing the swing arm 17 in synchronization with the position to which the ram 15 is fed, so that the guide block 36, i.e. the counterweight 18 is moved to a position which is point-symmetrical to the position of the guide block 26. Moving the counterweight 18 in this manner prevents a shift in the center of gravity of the horizontal boring machine 10'.

By the above configuration, the horizontal boring machine 10' with the ram 15 constraining the four surfaces of the saddle 14 can secure a high rigidity for the ram 15 and achieve a perfect balancer allowing no shift in the center of gravity of the whole machine with a simpler configuration. As a result, a change in weight balance due to a horizontal movement of the ram 15 and a change in weight balance caused when an attachment is attached to the front end of the ram 15 are handled. This suppresses displacement and deformation originating from the changes in weight balance and prevents a shift in the center of gravity of the whole machine. Accordingly, the straightness of the highly rigid ram 15 can be improved.

### INDUSTRIAL APPLICABILITY

The present invention is suitable for ram-type horizontal boring machines and the like.

## Claims

1. A machine tool balancer comprising:
a saddle constraining four side surfaces of a ram in such a way that the ram is horizontally movable;
a first counterweight having a same weight as a weight of the ram and the saddle, coupled to the ram and the saddle, and suspending the ram and the saddle;
a second counterweight configured to be moved on the basis of an amount of feeding of the ram to prevent a shift in a position of the center of gravity of the machine tool;
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block;
a suspending position moving device configured to move the second guide block to a position directly above the first guide block in synchronization with a position of the first guide block which is moved along with the feeding of the ram; and
a counterweight moving device configured to move the second counterweight to a position point-symmetrical to the position of the second guide block.

2. The machine tool balancer according to claim 1, wherein
a third guide block movably supported on the first guide rail is provided on an upper surface of the ram corresponding to and above a center of gravity of the ram in a state where an attachment with a maximum weight is mounted to the ram, and
in a case where an attachment is mounted to the ram, the suspending position moving device moves the second guide block, on the basis of a center of gravity of the ram which corresponds to a weight of the mounted attachment and exists between the first guide block and the third guide block, to a position directly above the center of gravity in synchronization with the center of gravity which is moved along with the feeding of the ram.

3. The machine tool balancer according to claim 2, wherein in the case where the attachment with the maximum weight is mounted to the ram, the suspending position moving device moves the second guide block to a position directly above the third guide block in synchronization with a position of the third guide block which is moved along with the feeding of the ram.

4. A machine tool balancer comprising:
a saddle constraining four side surfaces of a ram in such a way that the ram is horizontally movable;
a first counterweight having a same weight as a weight of the ram and the saddle, coupled to the ram and the saddle, and suspending the ram and the saddle;
a second counterweight configured to be moved on the basis of an amount of feeding of the ram to prevent a shift in a center of gravity of the machine tool;
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block;
a coupling structure including a bracket coupling the ram and the second guide block without interfering with the saddle and the suspension structure, and configured to move the second guide block by means of the bracket to a position directly above the first guide block in synchronization with a position of the first guide block which is moved along with the feeding of the ram; and
a counterweight moving device configured to move the second counterweight to a position point-symmetrical to the position of the second guide block.

5. The machine tool balancer according to claim 4, wherein
a third guide block movably supported on the first guide rail is provided on an upper surface of the ram corresponding to and above a center of gravity of the ram in a state where an attachment with a maximum weight is mounted to the ram,
a hydraulic cylinder is provided between the second guide block and the bracket, and
in a case where an attachment is mounted to the ram, the hydraulic cylinder moves the second guide block, on the basis of a center of gravity of the ram which corresponds to a weight of the mounted attachment and exists between the first guide block and the third guide block, to a position directly above the center of gravity.

6. The machine tool balancer according to claim 5, wherein in the case where the attachment with the maximum weight is mounted to the ram, the hydraulic cylinder moves the second guide block to a position directly above the third guide block.

7. A method of controlling balance of a machine tool including
a saddle constraining four side surfaces of a ram in such a way that the ram is horizontally movable,
a first counterweight having a same weight as a weight of the ram and the saddle, coupled to the ram and the saddle, and suspending the ram and the saddle,
a second counterweight configured to be moved on the basis of an amount of feeding of the ram to prevent a shift in a center of gravity of the machine tool, and
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block, the method comprising:
moving the second guide block to a position directly above the first guide block in synchronization with a position of the first guide block which is moved along with the feeding of the ram; and
moving the second counterweight to a position point-symmetrical to the position of the second guide block.

8. The method of controlling the balance of the machine tool according to claim 7, wherein
a third guide block movably supported on the first guide rail is further provided on an upper surface of the ram corresponding to and above a center of gravity of the ram in a state where an attachment with a maximum weight is mounted to the ram, and
in a case where an attachment is mounted to the ram, the second guide block is moved, on the basis of a center of gravity of the ram which corresponds to a weight of the mounted attachment and exists between the first guide block and the third guide block, to a position directly above the center of gravity in synchronization with the center of gravity which is moved along with the feeding of the ram.

9. The method of controlling the balance of the machine tool according to claim 8, wherein in the case where the attachment with the maximum weight is mounted to the ram, the second guide block is moved to a position directly above the third guide block in synchronization with a position of the third guide block which is moved along with the feeding of the ram.

10. A method of controlling balance of a machine tool including
a saddle constraining four side surfaces of a ram in such a way that the ram is horizontally movable,
a first counterweight having a same weight as a weight of the ram and the saddle, coupled to the ram and the saddle, and suspending the ram and the saddle,
a second counterweight configured to be moved on the basis of an amount of feeding of the ram to prevent a shift in a center of gravity of the machine tool,
a suspension structure including a first linear guide and a second linear guide, the first linear guide including a first guide block and a first guide rail disposed inside the saddle, the second linear guide including a second guide block and a second guide rail disposed outside the saddle, the first guide block being fixed to an upper surface of the ram above a center of gravity of the ram, the first guide rail and the second guide rail being connected to each other, the first counterweight and the second counterweight being coupled to the second guide block, and
a coupling structure including a bracket coupling the ram and the second guide block without interfering with the saddle and the suspension structure, the coupling structure being configured to move the second guide block by means of the bracket to a position directly above the first guide block in synchronization with a position of the first guide block which is moved along with the feeding of the ram, the method comprising
moving the second counterweight to a position point-symmetrical to the position of the second guide block.

11. The method of controlling the balance of the machine tool according to claim 10, wherein
a third guide block movably supported on the first guide rail is further provided on an upper surface of the ram corresponding to and above a center of gravity of the ram in a state where an attachment with a maximum weight is mounted to the ram,
a hydraulic cylinder is provided between the second guide block and the bracket, and
in a case where an attachment is mounted to the ram, the hydraulic cylinder moves the second guide block, on the basis of a center of gravity of the ram which corresponds to a weight of the mounted attachment and exists between the first guide block and the third guide block, to a position directly above the center of gravity.

12. The method of controlling the balance of the machine tool according to claim 11, wherein in the case where the attachment with the maximum weight is mounted to the ram, the hydraulic cylinder moves the second guide block to a position directly above the third guide block.
